# EUROPEAN PATENT APPLICATION

(11) **EP 4 852 116 A1**
(43) Date of publication of application: **09.12.2026**
(21) Application number: 25748673.8
(22) Date of filing: 29.01.2025
(51) Int. Cl.: H01M 10/052, H01M 4/133, H01M 4/36, H01M 4/38, H01M 4/587, H01M 10/0567

(54) **NON-AQUEOUS ELECTROLYTE SECONDARY BATTERY**

(30) Priority: 31.01.2024 JP 2024013416
(71) Applicant: Panasonic Intellectual Property Management Co., Ltd., Kadoma-shi, Osaka 571-0057 (JP)
(72) Inventor: SASAYAMA, Katsuhiro, Kadoma-shi, Osaka 571-0057 (JP); TAKAI, Yasuyuki, Kadoma-shi, Osaka 571-0057 (JP)
(74) Representative: Novagraaf International SA
(86) International application number: PCT/JP2025/002806
(87) International publication number: WO 2025/164670

(57) **Abstract**

A non-aqueous electrolyte secondary battery disclosed herein includes a positive electrode, a negative electrode, and a non-aqueous electrolyte. The negative electrode includes a negative electrode current collector and a negative electrode mixture layer disposed on the negative electrode current collector and containing a negative electrode active material. The negative electrode mixture layer contains graphite particles as the negative electrode active material. When the negative electrode mixture layer is divided in a thickness direction into two equal parts of an inner layer on the negative electrode current collector side and an outer layer on an outer surface side of the negative electrode mixture layer, an average value of internal void ratios of the graphite particles present in the outer layer is smaller than an average value of internal void ratios of the graphite particles present in the inner layer. The non-aqueous electrolyte contains a heterocyclic compound. A heterocyclic ring of the heterocyclic compound contains nitrogen and sulfur. The heterocyclic compound has an electron-withdrawing group R containing oxygen and/or nitrogen.

## Description

### [Technical Field]

The present disclosure relates to a non-aqueous electrolyte secondary battery.

### [Background Art]

Non-aqueous electrolyte secondary batteries such as lithium ion secondary batteries include a positive electrode, a negative electrode, and a non-aqueous electrolyte. In the non-aqueous electrolyte secondary batteries, metals such as copper and iron used in battery materials may dissolve to be metal ions. These dissolved metal ions may be deposited on the negative electrode. When the metal ions are deposited on the negative electrode, characteristics (for example, voltage) of the battery tend to deteriorate. Further, deposition of the metal ions also increases internal resistance of the non-aqueous electrolyte secondary battery.

Claim 1 of PTL 1 (WO 2023/145896 A) describes "a nonaqueous electrolyte for a nonaqueous electrolyte battery, comprising: a non-aqueous solvent; an electrolyte salt; and a heterocyclic compound containing at least one electron-withdrawing group R and a heterocyclic ring, wherein the electron-withdrawing group R contains oxygen and/or nitrogen, and the heterocyclic ring contains nitrogen and sulfur".

### [Citation List]

### [Patent Literature]

PTL 1: WO 2023/145896 A

### [Summary of Invention]

### [Technical Problem]

Currently, there is a need to reduce the internal resistance of the non-aqueous electrolyte secondary battery. In this situation, one of the objects of the present disclosure is to provide a non-aqueous electrolyte secondary battery with low internal resistance.

### [Solution to Problem]

One aspect of the present disclosure relates to a non-aqueous electrolyte secondary battery including: a positive electrode; a negative electrode; and a non-aqueous electrolyte, in which the negative electrode includes a negative electrode current collector and a negative electrode mixture layer disposed on the negative electrode current collector and containing a negative electrode active material, the negative electrode mixture layer contains graphite particles as the negative electrode active material, when the negative electrode mixture layer is divided in a thickness direction into two equal parts of an inner layer on the negative electrode current collector side and an outer layer on an outer surface side of the negative electrode mixture layer, an average value of internal void ratios of the graphite particles present in the outer layer is smaller than an average value of internal void ratios of the graphite particles present in the inner layer, the non-aqueous electrolyte contains a heterocyclic compound, a heterocyclic ring of the heterocyclic compound contains nitrogen and sulfur, and the heterocyclic compound has an electron-withdrawing group R containing oxygen and/or nitrogen.

### [Advantageous Effects of Invention]

According to the present disclosure, the non-aqueous electrolyte secondary battery with low internal resistance can be obtained.

The novel features of the present invention are described in the appended claims, but the present invention, both as to configuration and content, and in conjunction with other objects and features of the present invention, will be better understood by the following detailed description with reference to the drawings.

### [Brief Description of Drawings]

FIG. 1 is a partially cutaway perspective view schematically illustrating a non-aqueous electrolyte secondary battery according to an embodiment of the present disclosure.
FIG. 2 is a cross-sectional view schematically illustrating an example of a structure of a negative electrode of the non-aqueous electrolyte secondary battery according to the present disclosure.
FIG. 3 is a cross-sectional view schematically illustrating another example of the structure of the negative electrode of the non-aqueous electrolyte secondary battery according to the present disclosure.

### [Description of Embodiments]

Embodiments of the present disclosure will be described below with examples, but the present disclosure is not limited to the examples described below. In the following description, specific numerical values and materials may be given as examples, but other numerical values and other materials may be applied as long as the invention according to the present disclosure is implementable. In this specification, the description "a numerical value A to a numerical value B" includes the numerical value A and the numerical value B, and can be read as "the numerical value A or more and the numerical value B or less". In the following description, when lower limits and upper limits of numerical values relating to specific physical properties, conditions, or the like are given as examples, any of the given lower limits and any of the given upper limits may be arbitrarily combined as long as the lower limit is not equal to or more than the upper limit. In the following description, when examples of constituent elements or methods are listed, unless otherwise specified, only one of the listed examples may be used, or multiple of the listed examples may be used in combination.

### (Non-aqueous Electrolyte Secondary Battery)

The non-aqueous electrolyte secondary battery according to the present embodiment may be referred to as "non-aqueous electrolyte secondary battery (B)" or "secondary battery (B)" below. The secondary battery (B) includes a positive electrode, a negative electrode, and a non-aqueous electrolyte. The negative electrode includes a negative electrode current collector and a negative electrode mixture layer disposed on the negative electrode current collector and containing a negative electrode active material. The negative electrode mixture layer contains graphite particles as the negative electrode active material. When the negative electrode mixture layer is divided in a thickness direction into two equal parts of an inner layer on the negative electrode current collector side and an outer layer on an outer surface side of the negative electrode mixture layer, an average value VAout of internal void ratios of the graphite particles present in the outer layer is smaller than an average value VAinn of internal void ratios of the graphite particles present in the inner layer. The non-aqueous electrolyte contains a heterocyclic compound. A heterocyclic ring of the heterocyclic compound contains nitrogen and sulfur. The heterocyclic compound has an electron-withdrawing group R containing oxygen and/or nitrogen. Hereafter, the heterocyclic compound may be referred to as "heterocyclic compound (C)" or "compound (C)".

When impurity metal ions are present in the non-aqueous electrolyte, their deposition on the negative electrode increases internal resistance of the battery. The compound (C) contained in the non-aqueous electrolyte of the secondary battery (B) captures the impurity metal ions in the non-aqueous electrolyte. As a result, the internal resistance of the battery can be reduced. However, further reduction of the internal resistance is required to improve characteristics of the battery. Through investigation, the inventors of the present application have newly found that the internal resistance of the battery can be significantly reduced by combining use of the compound (C) with controlling distribution of graphite with different internal void ratios (distribution in the negative electrode mixture layer). The present disclosure is based on this new finding.

In the negative electrode mixture layer of the secondary battery (B), the average value VAout of the internal void ratios of the graphite particles present in the outer layer is smaller than the average value VAinn of the internal void ratios of the graphite particles present in the inner layer. The compound (C) acts on the negative electrode to reduce the internal resistance of the battery. However, when the compound (C) is present in the non-aqueous electrolyte, formation of a film on a surface of the negative electrode in contact with the non-aqueous electrolyte (non-aqueous electrolyte solution) may be significant. On the other hand, in the above configuration, since the graphite particles present in the outer layer have few voids, the non-aqueous electrolyte easily penetrates to the inside the negative electrode. Therefore, concentration of film formation on the surface of the negative electrode can be suppressed, and film formation uniformly occurs inside the negative electrode. As a result, it is considered that the internal resistance of the battery can be significantly reduced.

When a metal mixed into the battery is exposed to a positive electrode potential, metal ions may be dissolved from the metal into the non-aqueous electrolyte. The metal ions dissolved into the non-aqueous electrolyte move from the positive electrode side to the negative electrode side and are deposited on the negative electrode side. When such a dissolution-deposition reaction progresses, the deposited metal grows in a dendrite-like structure, and characteristics (for example, voltage) of the non-aqueous electrolyte secondary battery deteriorate. Therefore, it is important to suppress deterioration of the characteristics due to dissolution and deposition of the metal and the like in the non-aqueous electrolyte secondary battery. Since the non-aqueous electrolyte of the present disclosure contains the heterocyclic compound (C), the deterioration of the characteristics due to the dissolution-deposition reaction of the metal is significantly suppressed.

The heterocyclic compound (C) captures the metal ions (for example, copper ions) in the non-aqueous electrolyte by the heterocyclic ring (H), to suppress a reduction-deposition reaction of the metal ions at the negative electrode. In addition, the electron-withdrawing group R included in the heterocyclic compound (C) has an effect of enhancing metal ion-capturing action of the heterocyclic ring (H). Furthermore, the electron-withdrawing group R itself is also thought to capture the metal ions in the non-aqueous electrolyte, to obtain an effect of suppressing the reduction-deposition reaction of the metal ions at the negative electrode. In this way, the metal ion-capturing action of the heterocyclic compound (C) is enhanced, and the heterocyclic compound (C) has a plurality of different atomic groups capable of capturing the metal ions. Thus, a large number of metal ions are efficiently captured, and consequently, the reduction-deposition reaction of the metal ions is significantly suppressed.

Furthermore, the metal ions with a plurality of different ionic valencies can typically exist in the non-aqueous electrolyte. For example, copper ions with two valencies of Cu⁺ and Cu²⁺ having different electron-accepting properties can exist in the non-aqueous electrolyte. If there is only one type of atomic group capable of coordinating with the metal ions, the atomic group may easily form a coordinate bond with one type of metal ions (for example, monovalent copper ions) among the metal ions with different ionic valencies, but have difficulty in forming a coordinate bond with the other type of ions (for example, divalent copper ions). In that case, it is difficult to capture all the metal ions generated in the battery. In contrast, by using the heterocyclic compound (C) having at least two different atomic groups that easily coordinate according to the valencies of the metal ions, the metal ions can be captured with high efficiency.

The average value VAout of the internal void ratios of the graphite particles present in the outer layer is smaller than the average value VAinn of the internal void ratios of the graphite particles present in the inner layer. A ratio VAout/VAinn of VAout to VAinn is 0 or more and less than 1. The ratio VAout/VAinn may be 0.75 or less, 0.5 or less, or 0.25 or less.

The negative electrode mixture layer may satisfy the following conditions (1) to (3). By satisfying the following conditions (1) to (3), it is possible to make the average value VAout of the internal void ratios of the graphite particles present in the outer layer smaller than the average value VAinn of the internal void ratios of the graphite particles present in the inner layer.
(1) The graphite particles (negative electrode active material) include first graphite particles and second graphite particles.
(2) An internal void ratio Vr1 of the first graphite particles is smaller than an internal void ratio Vr2 of the second graphite particles.
(3) A content R1out of the first graphite particles in the outer layer is greater than a content R1inn of the first graphite particles in the inner layer.

Regarding the condition (1), a total proportion of the first graphite particles and the second graphite particles in the graphite particles may be 90 mass% or more. The graphite particles may be constituted of only the first graphite particles and the second graphite particles.

Regarding the condition (2), the internal void ratio Vr1 of the first graphite particles may be 1% or more or 3% or more, and may be 15% or less, 10% or less, 5% or less, or 3% or less. The internal void ratio Vr2 of the second graphite particles may be 8% or more or 15% or more, and may be 30% or less, 25% or less, or 15% or less. In a preferred example, the internal void ratio of the first graphite particles is 5% or less, and the internal void ratio of the second graphite particles is in a range of 8% to 20%.

Regarding the condition (3), a ratio R1inn/R1out of the content R1inn of the first graphite particles in the inner layer to the content R1out of the first graphite particles in the outer layer is 0 or more and less than 1. The ratio R1inn/R1out may be 0.5 or less or 0.3 or less.

The negative electrode mixture layer may satisfy the following condition (4) in addition to the conditions (1) to (3).
(4) A content R2out of the second graphite particles in the outer layer is less than or equal to a content R2inn of the second graphite particles in the inner layer.

Regarding the condition (4), a ratio R2out/R2inn of the content R2out of the second graphite particles in the outer layer to the content R2inn of the second graphite particles in the inner layer is 0 or more and less than 1. The ratio R2out/R2inn may be 0.5 or less or 0.3 or less.

The negative electrode mixture layer may satisfy the following conditions (1') to (3'). By satisfying the following conditions (1') to (3'), it is possible to make the average value VAout of the internal void ratios of the graphite particles present in the outer layer smaller than the average value VAinn of the internal void ratios of the graphite particles present in the inner layer.
(1') The graphite particles (negative electrode active material) include graphite particles A and graphite particles B.
(2') An internal void ratio of the graphite particles A is 5% or less, and an internal void ratio of the graphite particles B is 8% or more and 20% or less.
(3') A content RAout of the graphite particles A in the outer layer is greater than a content RAinn of the graphite particles A in the inner layer.

The negative electrode mixture layer may satisfy the following condition (4') in addition to the conditions (1') to (3') described below.
(4') A content RBout of the graphite particles B in the outer layer is less than or equal to a content RBinn of the graphite particles B in the inner layer.

Regarding the condition (3'), a ratio RAinn/RAout of the content RAinn of the graphite particles A in the inner layer to the content RAout of the graphite particles A in the outer layer is 0 or more and less than 1. The ratio RAinn/RAout may be 0.5 or less or 0.3 or less.

Regarding the condition (4'), a ratio RBout/RBinn of the content RBout of the graphite particles B in the outer layer to the content RBinn of the graphite particles B in the inner layer is 0 or more and less than 1. The ratio RBout/RBinn may be 0.5 or less or 0.3 or less.

The internal void ratio of the graphite particles can be measured by the following method. First, a cross-section of the negative electrode mixture layer is exposed. A method for exposing the cross-section is not particularly limited. In one example method, a portion of the negative electrode is cut off and processed using an ion milling device (for example, IM4000PLUS manufactured by Hitachi High-Tech Corporation) to expose the cross-section of the negative electrode mixture layer.

Next, a reflected electron image of the exposed cross-section of the negative electrode mixture layer is taken using a scanning electron microscope. A magnification for taking the reflected electron image is 3,000 times to 5,000 times.

Next, the obtained cross-sectional image is imported into a computer and binarized using image analysis software (for example, ImageJ from the National Institutes of Health). A binarized image in which particle cross-sections in the cross-sectional image are converted to black and voids present in the particle cross-sections are converted to white is obtained by the binarization processing.

Next, from the binarized image, graphite particles with a particle size of 5 µm or more and 50 µm or less are selected, and an area of a cross-section of each selected graphite particle and an area of internal voids present in the cross-section of the graphite particle are calculated. Here, the area of a cross-section of a graphite particle refers to an area of a region surrounded by an outer circumference of the graphite particle, that is, an entire area of the cross-section of the graphite particle. Further, for voids with a width of 3 µm or less present in a cross-section of a graphite particle, since it may be difficult to distinguish between an internal void and an external void in image analysis, the voids with a width of 3 µm or less are treated as internal voids. Then, from the calculated area of the cross-section of the graphite particle and the area of the internal voids in the cross-section of the graphite particle, the internal void ratio of the graphite particle can be determined using the following formula. 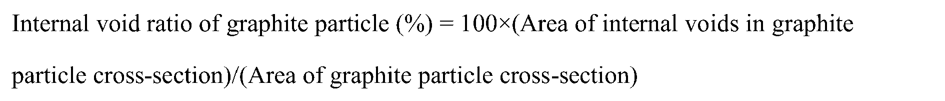 Internal void ratio of graphite particle (%) = 100×(Area of internal voids in graphite particle cross-section)/(Area of graphite particle cross-section)

The internal void ratio Vr1 of the first graphite particles is obtained by calculating an arithmetic mean of the internal void ratios of 10 arbitrarily selected first graphite particles. Similarly, the internal void ratio Vr2 of the second graphite particles is obtained by calculating an arithmetic mean of the internal void ratios of 10 arbitrarily selected second graphite particles. That is, the internal void ratio Vr1 of the first graphite particles and the internal void ratio Vr2 of the second graphite particles are average values of their respective internal void ratios. On the other hand, the internal void ratios of the graphite particle A and the graphite particle B are internal void ratios of the respective particles.

The average value VAout of the internal void ratios of the graphite particles present in the outer layer is obtained by calculating an arithmetic mean of the internal void ratios of 10 arbitrarily selected graphite particles in the outer layer. Similarly, the average value VAinn of the internal void ratios of the graphite particles present in the inner layer is obtained by calculating an arithmetic mean of the internal void ratios of 10 arbitrarily selected graphite particles in the inner layer.

Comparison of the contents of predetermined graphite particles (first graphite particles, second graphite particles, graphite particles A, graphite particles B) in predetermined layers (inner layer, outer layer) can be performed using proportions of cross-sections of the predetermined graphite particles in cross-sections of the predetermined layers. For example, the comparison of the content R1out of the first graphite particles and the content R1inn of the first graphite particles in the inner layer can be performed by comparing a proportion of cross-sections of the first graphite particles in a cross-section of the outer layer with a proportion of cross-sections of the first graphite particles in a cross-section of the inner layer. The comparison of the contents of the predetermined graphite particles in the predetermined layers can be performed using values obtained by arbitrarily selecting and evaluating 10 graphite particles in each layer.

A BET specific surface area of the first graphite particles is preferably 3.5 m²/g or less, and more preferably 3.0 m²/g or less. When the BET specific surface area of the first graphite particles is 3.5 m²/g or less, side reactions between the first graphite particles and the non-aqueous electrolyte can be further suppressed.

A BET specific surface area of the second graphite particles is preferably 3.5 m²/g or more, and more preferably 4.0 m²/g or more. When the BET specific surface area of the second graphite particles is 3.5 m²/g or more, it is easier to fill the negative electrode mixture layer with the second graphite particles at high density when producing the negative electrode mixture layer by rolling. As a result, capacity of the battery can be increased.

A volume-based median diameter (D50) of the first graphite particles and a volume-based median diameter (D50) of the second graphite particles each may be 1 µm or more or 10 µm or more, and may be 30 µm or less or 25 µm or less. The median diameter is a diameter at which a cumulative volume in a volume-based particle size distribution is 50%. The particle size distribution can be measured using a laser diffraction particle size distribution analyzer (for example, MT3000II manufactured by MicrotracBell Corp.) with water as a dispersion medium.

The specific surface area and the median diameter of the graphite particles A may be respectively within the ranges exemplified for the specific surface area and the median diameter of the first graphite particles. The specific surface area and the median diameter of the graphite particles B may be respectively within the ranges exemplified for the specific surface area and the median diameter of the second graphite particles.

A content of the heterocyclic compound (C) in the non-aqueous electrolyte may be 0.01 mass% or more, 0.1 mass% or more, or 0.5 mass% or more, and may be 10.0 mass% or less, 5.0 mass% or less, or 2.0 mass% or less. The content may be in a range of 0.01 to 10.0 mass%, 0.1 to 10.0 mass%, or 1.0 to 10.0 mass%. Within these ranges, the upper limit may be 5.0 mass% or less or 2.0 mass% or less. By setting the content in the range of 0.1 to 2.0 mass%, an influence of addition of the heterocyclic compound (C) on charge-discharge characteristics of the battery can be reduced.

The non-aqueous electrolyte may contain only one compound or a plurality of compounds as the heterocyclic compound (C).

The electron-withdrawing group R contained in the heterocyclic compound (C) can have coordinate bonding properties with respect to the metal ions. The electron-withdrawing group R contains oxygen and/or nitrogen. That is, the electron-withdrawing group R contains at least one selected from oxygen and nitrogen. The electron-withdrawing group R may contain only one of oxygen and nitrogen, or both.

The electron-withdrawing group R may include or be at least one selected from the group consisting of a carbonyl group (-C(=O)-), a nitrile group (-C≡N), a sulfonyl group (-S(=O)₂-), an isocyanate group (-N=C=O), an isothiocyanate group (-N=C=S), and a hydroxy group (-OH). The hydroxy group serving as the electron-withdrawing group R is bonded to a carbon atom that constitutes a saturated hydrocarbon group (for example, an alkyl group or an alkylene group). The nitrile group may be included in a thionitrile group. The sulfonyl group may be included in a sulfonic acid ester bond (-S(=O)₂-O-). Note that a C=O moiety included in the isocyanate group and the isothiocyanate group is usually not treated as the carbonyl group. Therefore, also in this specification, the C=O moiety included in the isocyanate group and the isothiocyanate group is not treated as the carbonyl group.

The electron-withdrawing group R may be a carbonyl group, a nitrile group, a sulfonyl group, an isocyanate group, an isothiocyanate group, or a hydroxy group. The electron-withdrawing group R may be at least one selected from the group consisting of the carbonyl group, the nitrile group, the sulfonyl group, the isocyanate group, and the isothiocyanate group. The electron-withdrawing group R may be at least one selected from the group consisting of the carbonyl group, the sulfonyl group, the isocyanate group, and the isothiocyanate group.

The carbonyl group may be included in at least one selected from the group consisting of an aldehyde group (-CHO), a ketone group, an amide bond (C(=O)-N), an ester bond (COO), and a carboxy group (-COOH). That is, the electron-withdrawing group R may be at least one selected from the group consisting of the aldehyde group, the carbonyl group included in ketone, the amide bond, the ester bond, and the carboxy group.

The number of electron-withdrawing groups R in the heterocyclic compound (C) may be 1, 2 or more, 5 or more, or 5 or less. The number of heterocyclic rings (H) in the heterocyclic compound (C) may be 1, 2, or 3 or less, and may be 3 or more.

The heterocyclic ring (H) contains nitrogen and sulfur. The heterocyclic ring (H) may or may not be aromatic. The number of atoms constituting the heterocyclic ring (H) may be in a range of 5 to 8 or 5 to 7, and may be 5 or 6. That is, the heterocyclic ring (H) may be a five-membered, six-membered, seven-membered, or eight-membered ring.

The heterocyclic ring (H) may satisfy the following conditions (1) and/or (2), or may satisfy the following conditions (1) and (3):
(1) The heterocyclic ring (H) is constituted of one nitrogen atom, one sulfur atom, and a plurality of carbon atoms.
(2) The nitrogen atom forms a double bond with an adjacent carbon atom that constitutes the heterocyclic ring (H).
(3) The nitrogen atom forms a single bond with each of two adjacent carbon atoms that constitute the heterocyclic ring (H).

The heterocyclic ring (H) may be a thiazole ring represented as follows:

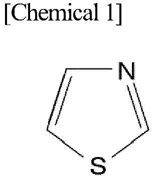

The heterocyclic ring (H) may also be a thiomorpholine ring represented as follows.

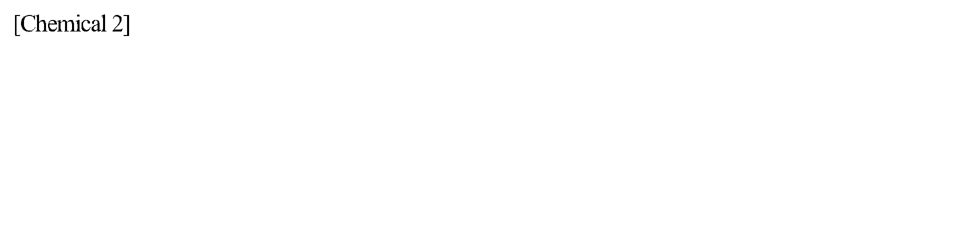

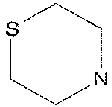

The heterocyclic ring (H) may be a thiazepine ring represented as follows. Note that the thiazepine ring may be a 1,3-thiazepine ring or a 1,4-thiazepine ring.

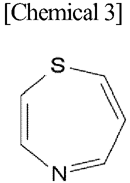

The heterocyclic ring (H) may include or be at least one selected from the group consisting of a thiazole ring, a thiomorpholine ring, and a thiazepine ring.

The structure of the heterocyclic compound (C), other than the heterocyclic ring (H) and the electron-withdrawing group R, is not limited as long as effects of the present disclosure are obtained. Portions other than the heterocyclic ring (H) and the electron-withdrawing group R may be constituted of only hydrocarbons. Examples of the hydrocarbons include hydrocarbon groups (including hydrocarbon chains). Examples of the hydrocarbons include aliphatic hydrocarbons and aromatic hydrocarbons. The heterocyclic compound (C) may include an ether bond, a thioether bond, nitrogen not included in the electron-withdrawing group R, and the like.

The molecular weight of the heterocyclic compound (C) may be 100 or more or 130 or more, and may be 400 or less or 370 or less.

As the heterocyclic compound (C), a compound that dissolves in a non-aqueous solvent of the non-aqueous electrolyte is preferably used.

Examples of the heterocyclic compound (C) include compounds shown in Table 1 below. The heterocyclic compound (C) may be at least one selected from the group consisting of 15 compounds shown in Table 1.

**[Table 1]**

| No. | Compound name |
|---|---|
| 1 | 4,5-dimethyl-1,3-thiazole-2-carbaldehyde |
| 2 | 4,5,6,7-tetrahydro-1,3-benzothiazole-2-carbaldehyde |
| 3 | 2-ethynyl-4-methylthiazole-5-carboxylate |
| 4 | N-benzyl-2-ethynyl-4-methylthiazole-5-carboxamide |
| 5 | 4-methyl-5-(2-thiocyanatoethyl)thiazole |
| 6 | perflourophenyl 4,5-dimethylthiazole-2-sulfonate |
| 7 | 2-(trimethylsilyl)thiazole-4-carbaldehyde |
| 8 | 4-(((tert-butyldimethylsilyl)oxy)methyl)thiazole-2-carbaldehyde |
| 9 | 1-(5-(hydroxymethyl)-4-methylthiazol-2-yl)ethan-1-one |
| 10 | 5-isocyanato-4-methyl-2-phenylthiazole |
| 11 | 5-isocyanato-4-methyl-2-(pyrazine-2-yl)thiazole |
| 12 | 2-ethyltiomorpholine-4-carbaldehyde |
| 13 | 2,3-dimethylthiomorpholine-4-carbaldehyde |
| 14 | 2-methyl-4-thiocyanatobenzo[b][1,4]thiazepine |
| 15 | 4-methyl-2-thiocyanatobenzo[b][1,4]thiazepine |

The heterocyclic compound (C) may include or be at least one selected from the group consisting of 4,5-dimethyl-1,3-thiazole-2-carbaldehyde, 4,5,6,7-tetrahydro-1,3-benzothiazole-2-carbaldehyde, 2-ethylthiomorpholine-4-carbaldehyde, and 2,3-dimethylthiomorpholine-4-carbaldehyde. These compounds are preferred in that a high effect can be obtained.

Among the above heterocyclic compounds (C), 2-ethylthiomorpholine-4-carbaldehyde and 2,3-dimethylthiomorpholine-4-carbaldehyde are preferable in that they are highly effective in capturing metal ions.

A commercially available compound may be used as the heterocyclic compound (C). Alternatively, the heterocyclic compound (C) may be synthesized using a known synthesis method.

The content of the heterocyclic compound (C) in the non-aqueous electrolyte is determined, for example, using gas chromatography under the following conditions.
Instrument used: GC-2010 Plus manufactured by Shimadzu Corporation
Column: HP-1 (film thickness is 1 µm, inner diameter is 0.32 mm, length is 60 m) manufactured by J&W
Column temperature: temperature is raised from 50°C to 90°C at a heating rate of 5°C/min, kept at 90°C for 15 minutes, then raised from 90°C to 250°C at a heating rate of 10°C/min, and kept at 250°C for 15 minutes
Split ratio: 1/50
Linear velocity: 30.0 cm/sec
Injection port temperature: 270°C
Injection volume: 1 µL
Detector: FID 290°C (sens.10¹)

In one aspect, an example of the non-aqueous electrolyte according to the present embodiment contains the non-aqueous solvent, an electrolyte salt, and a heterocyclic compound (C1). The heterocyclic compound (C1) includes at least one atomic group Z containing oxygen and/or nitrogen, and a heterocyclic ring (H). It is possible to use, as the atomic group Z, an atomic group given as an example of the electron-withdrawing group R. The atomic group Z may include or be at least one selected from the group consisting of a carbonyl group, a nitrile group, a sulfonyl group, and a hydroxy group. The hydroxy group serving as the atomic group Z is bonded to a carbon atom that constitutes a saturated hydrocarbon group.

The non-aqueous electrolyte secondary battery according to the present embodiment includes a positive electrode containing a positive electrode active material, a negative electrode facing the positive electrode, and a non-aqueous electrolyte. The non-aqueous electrolyte secondary battery may include other constituent elements. For example, the non-aqueous electrolyte secondary battery usually further includes a separator and an exterior body. The separator is disposed between the positive electrode and the negative electrode. The exterior body houses an electrode group including the positive electrode, the negative electrode, and the separator, and the non-aqueous electrolyte. The positive electrode, the negative electrode, the separator, and the exterior body are not particularly limited and known ones may be used.

There are no limitations on the shape of the non-aqueous electrolyte secondary battery, and it may be cylindrical or rectangular. There are no limitations on the form of the electrode group of the non-aqueous electrolyte secondary battery, and it may be a wound type or a stacked type.

Examples of the constituent elements of the non-aqueous electrolyte secondary battery (B) are described below. However, the constituent elements of the secondary battery (B) are not limited to the examples below.

### (Non-aqueous Electrolyte)

The non-aqueous electrolyte contains the non-aqueous solvent, the electrolyte salt, and the heterocyclic compound (C). As the heterocyclic compound (C), the above-described compounds can be used.

### (Non-aqueous Solvent)

Examples of the non-aqueous solvent include a cyclic carbonic acid ester, a chain carbonic acid ester, a cyclic carboxylic acid ester, and a chain carboxylic acid ester. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). Examples of the chain carboxylic acid ester include methyl formate, ethyl formate, propyl formate, methyl acetate (MA), ethyl acetate, propyl acetate, methyl propionate, ethyl propionate, and propyl propionate. The non-aqueous electrolyte may contain only one non-aqueous solvent or two or more non-aqueous solvents.

### (Electrolyte Salt)

Lithium salt is suitable as the electrolyte salt. Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, LiI, borates, and imide salts. Examples of the borates include lithium difluoro(oxalato)borate and lithium bis(oxalato)borate. Examples of the imide salts include lithium bis(fluorosulfonyl)imide (LiN(FSO₂)₂) and lithium bis(trifluoromethanesulfonate)imide (LiN(CF₃SO₂)₂). The non-aqueous electrolyte may contain only one electrolyte salt or two or more electrolyte salts.

The concentration of the electrolyte salt in the non-aqueous electrolyte may be 0.5 mol/L or more and 2 mol/L or less.

The non-aqueous electrolyte may contain other additives. Examples of the other additives include at least one selected from the group consisting of vinylene carbonate, fluoroethylene carbonate, and vinyl ethylene carbonate.

The non-aqueous electrolyte may also contain compounds other than the heterocyclic compound (C) as an additive that suppresses the dissolution-deposition reaction of the metal ions. Examples of such compounds may include an isocyanate compound having an isocyanate group and/or a nitrile compound having two or more nitrile groups. The isocyanate compound is reductively decomposed at the negative electrode, forms a film on a surface of the negative electrode active material (for example, a carbon material such as graphite), and has an effect of suppressing reductive decomposition of the non-aqueous electrolyte. This makes it possible to suppress the reduction-deposition reaction of the metal ions. On the other hand, the nitrile compound is oxidized at the positive electrode, and has an effect of forming a film on the positive electrode active material. This makes it possible to suppress dissolution of metal ions that constitute the positive electrode active material into the non-aqueous electrolyte. However, the heterocyclic compound (C) of the present disclosure is significantly superior to isocyanate compounds and nitrile compounds in suppressing the dissolution-deposition reaction of the metal ions.

### (Positive Electrode)

The positive electrode contains the positive electrode active material. The positive electrode usually includes a positive electrode current collector and a positive electrode mixture layer held on the positive electrode current collector. In an example of a method for forming the positive electrode mixture layer, first, a positive electrode slurry is prepared by dispersing components of a positive electrode mixture in a dispersion medium. Next, the positive electrode mixture layer can be formed by applying the positive electrode slurry to a surface of the positive electrode current collector to form a coating film, and then drying the coating film. The dried coating film may be rolled as needed. The positive electrode mixture contains the positive electrode active material as an essential component, and may contain a binding agent, a thickener, and the like as optional components.

### (Positive Electrode Active Material)

The positive electrode active material can be any material that can be used as the positive electrode active material of the non-aqueous electrolyte secondary battery (for example, a lithium ion secondary battery), and is not particularly limited. A preferred positive electrode active material is, for example, a lithium transition metal composite oxide having a layered rock salt type structure and containing Ni and at least one selected from the group consisting of Co, Mn, and Al. The lithium transition metal composite oxide may be referred to as "composite oxide HN" below.

From the viewpoint of achieving a high capacity, it is desirable that a proportion of Ni in the metal elements other than Li contained in the composite oxide HN is 80 atomic % or more. The proportion of Ni in the metal elements other than Li may be 85 atomic % or more, or 90 atomic % or more. The proportion of Ni in the metal elements other than Li may be 95 atomic % or less.

The composite oxide HN may also be an oxide represented by a formula Li_{α}Ni_{(1-x1-x2-y-z)}Coₓ₁Mnₓ₂Al_{y}M_{z}O_{2+β}. An element M is an element other than Li, Ni, Co, Mn, Al, and O (oxygen).

In the above formula, α, which represents an atomic ratio of lithium, may satisfy 0.95 ≤ α ≤ 1.05. However, α increases or decreases with charging and discharging. In (2 + β), which represents an atomic ratio of oxygen, β may satisfy -0.05 ≤ β ≤ 0.05.

1-x1-x2-y-z (= v), which represents an atomic ratio of Ni, is 0.8 or more, and may be 0.85 or more, 0.90 or more, or 0.95 or more. v, which represents the atomic ratio of Ni, may be 0.98 or less or 0.95 or less. x1, which represents an atomic ratio of Co, may be 0.1 or less (0 ≤ x1 ≤ 0.1). x2, which represents an atomic ratio of Mn, may be 0.1 or less (0 ≤ x2 ≤ 0.1). y, which represents an atomic ratio of Al, may be 0.1 or less (0 ≤ y ≤ 0.1).

z, which represents an atomic ratio of the element M, may satisfy 0 ≤ z ≤ 0.10. The element M may be at least one selected from the group consisting of Ti, Zr, Nb, Mo, W, Fe, Zn, B, Si, Mg, Ca, Sr, Sc, and Y. When the element M includes at least one selected from the group consisting of Nb, Sr, and Ca, it is considered that a surface structure of the composite oxide HN is stabilized, resistance is reduced, and metal dissolution is further suppressed.

The composite oxide HN may be secondary particles formed by aggregation of a plurality of primary particles. A particle size of the primary particles may be 0.05 µm or more and 1 µm or less. An average particle size of the secondary particles of the composite oxide HN may be 3 µm or more and 30 µm or less, or 5 µm or more and 25 µm or less. In this specification, the average particle size means the median diameter (D50) described above.

### (Other)

For example, a resin material is used as the binding agent. Examples of the binding agent include fluororesins, polyolefin resins, polyamide resins, polyimide resins, acrylic resins, vinyl resins, and rubber-like materials (for example, styrene-butadiene copolymer (SBR)). The binding agent may be used alone or in combination of two or more types.

Examples of the thickener include cellulose derivatives such as cellulose ether. Examples of the cellulose derivatives include carboxymethylcellulose (CMC) and modified products thereof, and methyl cellulose. The thickener may be used alone or in combination of two or more types.

Examples of conductive materials include carbon nanotubes (CNTs), carbon fibers other than CNTs, and conductive particles (for example, carbon black).

The dispersion medium used in the positive electrode slurry is not particularly limited, and examples of the dispersion medium include water, alcohol, N-methyl-2-pyrrolidone (NMP), and a mixed solvent thereof.

For example, a metal foil can be used as the positive electrode current collector. The positive electrode current collector may be porous. Examples of a porous current collector include a net, a punched sheet, and an expanded metal. Examples of materials for the positive electrode current collector include stainless steel, aluminum, aluminum alloys, and titanium. The thickness of the positive electrode current collector is not particularly limited, and may be in a range of 1 to 50 µm (for example, in a range of 5 to 30 µm).

### (Negative Electrode)

The negative electrode includes the negative electrode current collector and the negative electrode mixture layer disposed on the negative electrode current collector. The negative electrode mixture layer contains the negative electrode active material.

The negative electrode mixture layer contains the negative electrode active material as an essential component. The negative electrode mixture layer may contain a binding agent, a thickener, and a conductive agent as optional components.

### (Negative Electrode Active Material)

As the negative electrode active material, metallic lithium, a lithium alloy, or the like may be used, but a material capable of electrochemically absorbing and releasing lithium ions is preferably used. Examples of such materials include carbonaceous materials and Si-containing materials. The negative electrode mixture layer may contain one type of negative electrode active material, or a combination of two or more types.

Examples of the carbonaceous materials include graphite, easily graphitizable carbon (soft carbon), and non-graphitizable carbon (hard carbon). The carbonaceous materials may be used alone or in combination of two or more types. The graphite is particularly preferred as the carbonaceous material because it is excellent in charge-discharge stability and has a small irreversible capacity. Examples of the graphite include natural graphite, artificial graphite, and graphitized mesophase carbon particles.

Examples of the Si-containing materials include elemental Si, silicon alloys, silicon compounds (such as silicon oxides), and composite materials in which a silicon phase is dispersed in a lithium ion conducting phase (matrix). Examples of the silicon oxides include SiOₓ particles. x is, for example, 0.5 ≤ x < 2, and may be 0.8 ≤ x ≤ 1.6. As the lithium ion conducting phase, at least one selected from the group consisting of a SiO₂ phase, a silicate phase (for example, a lithium silicate phase), and a carbon phase can be used.

As described above, the negative electrode mixture layer of the non-aqueous electrolyte secondary battery (B) contains graphite as the negative electrode active material. The negative electrode mixture layer of the secondary battery (B) may further contain the Si-containing material as the negative electrode active material.

The proportion of the Si-containing material in the negative electrode active material may be 1 mass% or more or 10 mass% or more, and may be 3 mass% or less or 7 mass% or less.

The binding agent, the thickener, the conductive agent, and a dispersion medium used in a negative electrode slurry are not particularly limited, and the materials exemplified for the positive electrode may be used.

For example, a metal foil can be used as the negative electrode current collector. The negative electrode current collector may be porous. Examples of materials for the negative electrode current collector include stainless steel, nickel, a nickel alloy, copper, and a copper alloy. The thickness of the negative electrode current collector is not particularly limited, and may be in the range of 1 to 50 µm (for example, in the range of 5 to 30 µm).

The negative electrode mixture layer may be formed by applying the negative electrode slurry obtained by dispersing components of a negative electrode mixture in the dispersion medium to a surface of the negative electrode current collector, and drying the slurry. The dried coating film may be rolled if necessary.

To make the internal void ratio of the graphite particles differ between the inner layer and the outer layer, the negative electrode mixture layer may be constituted of a plurality of layers. By changing the internal void ratio of the graphite particles disposed in each layer, the average value of the internal void ratios of the graphite particles in the inner layer and the average value of the internal void ratios of the graphite particles in the outer layer can be adjusted. Since graphite particles with various internal void ratios are commercially available, it is possible to use graphite particles with an appropriate internal void ratio. Note that graphite particles with different internal void ratios may be manufactured using a known method.

### (Separator)

It is desirable to interpose the separator between the positive electrode and the negative electrode. The separator has high ion permeability, appropriate mechanical strength, and insulating properties. As the separator, a microporous thin film, woven fabric, nonwoven fabric, or the like can be used. As a material of the separator, a polyolefin such as polypropylene or polyethylene is preferred.

The electrode group of the non-aqueous electrolyte secondary battery (B) may be a wound electrode group. In the wound electrode group, the positive electrode and the negative electrode are wound together with the separator interposed therebetween. Alternatively, the electrode group may be a stacked-type electrode group. The stacked-type electrode group is formed by stacking a flat positive electrode and a flat negative electrode in one direction with the separator interposed therebetween. There are no limitations on the form of the non-aqueous electrolyte secondary battery (B), and it may be cylindrical, prismatic, coin-type, button-type, laminate-type, or the like.

### (Method for Manufacturing Non-Aqueous Electrolyte Secondary Battery (B))

A method for manufacturing the non-aqueous electrolyte secondary battery (B) is not particularly limited, except for a method for forming the negative electrode mixture layer. In one example of the manufacturing method, first, the electrode group is formed using the negative electrode, the positive electrode, and the separator, which are formed by the above-described method. Next, the secondary battery (B) can be manufactured by sealing the electrode group and the non-aqueous electrolyte in the exterior body.

Hereinafter, an example of an embodiment according to the present disclosure will be specifically described with reference to the drawings. The embodiment described below can be modified based on the above description. Further, matters described below may be applied to the above embodiment. Furthermore, matters not essential to the invention according to the present disclosure may be omitted in the embodiment described below.

### (First Embodiment)

In a first embodiment, an example of a prismatic non-aqueous electrolyte secondary battery will be described as an example of the non-aqueous electrolyte secondary battery (B).

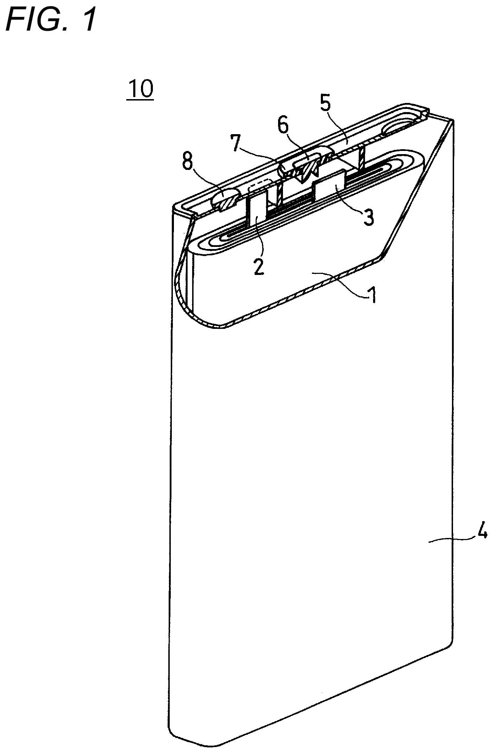

FIG. 1 schematically illustrates a partially exploded perspective view of the non-aqueous electrolyte secondary battery of the first embodiment. A non-aqueous electrolyte secondary battery 10 in FIG. 1 includes a bottomed rectangular tubular battery case 4, and an electrode group 1 and the non-aqueous electrolyte (not illustrated) housed in the battery case 4. The non-aqueous electrolyte contains the heterocyclic compound (C). The negative electrode mixture layer of the negative electrode contains the graphite particles described above.

The electrode group 1 includes a strip-shaped negative electrode, a strip-shaped positive electrode, and a separator interposed therebetween. The negative electrode current collector of the negative electrode is electrically connected to a negative electrode terminal 6 provided on a sealing plate 5 via a negative electrode lead 3. The negative electrode terminal 6 is insulated from the sealing plate 5 by a resin gasket 7. The positive electrode current collector of the positive electrode is electrically connected to a back surface of the sealing plate 5 via a positive electrode lead 2. A peripheral edge of the sealing plate 5 is fitted into an opening end of the battery case 4, and the fitting portion is welded with a laser. That is, the positive electrode is electrically connected to the battery case 4, which also serves as a positive electrode terminal. The sealing plate 5 has an injection hole for the non-aqueous electrolyte. The injection hole is sealed by a sealing plug 8 after the non-aqueous electrolyte is injected.

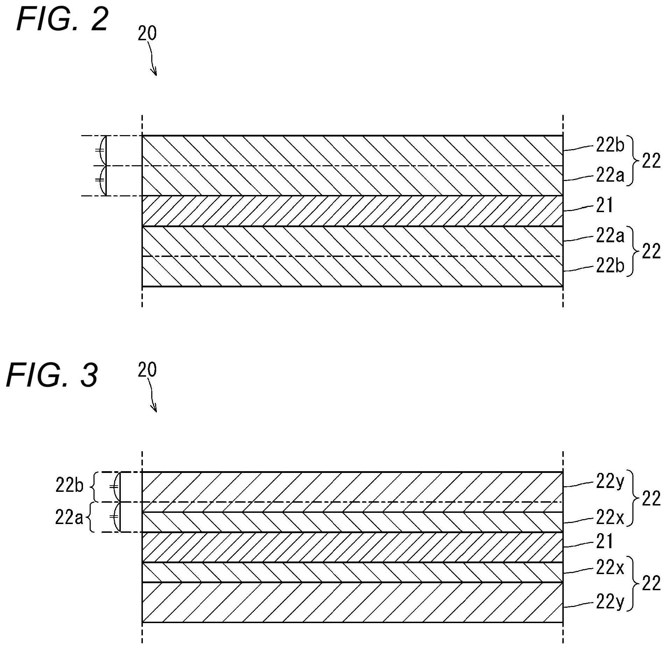

FIG. 2 schematically illustrates a cross-section of a part of an example of the negative electrode. The negative electrode 20 includes a negative electrode current collector 21 and a negative electrode mixture layer 22 formed on both surfaces of the negative electrode current collector 21. When the negative electrode mixture layer 22 is divided into two equal parts in the thickness direction, a portion on the negative electrode current collector 21 side is an inner layer 22a, and a portion on the outer surface side of the negative electrode mixture layer is an outer layer 22b.

The negative electrode mixture layer 22 may be formed by laminating a plurality of negative electrode mixture layers using different negative electrode slurries. For example, the inner layer 22a may be formed with a first negative electrode slurry, and the outer layer 22b may be formed with a second negative electrode slurry. In this case, the internal void ratio of the graphite in the first negative electrode slurry and the internal void ratio of the graphite in the second negative electrode slurry are selected so that the internal void ratios of the graphite satisfy the above conditions. For example, it is sufficient to select the contents of the first graphite particles and the second graphite particles in the first negative electrode slurry and the contents of the first graphite particles and the second graphite particles in the second negative electrode slurry so as to satisfy the above conditions.

Note that a thickness Dx of a first layer 22x formed by the first negative electrode slurry may be equal to, less than, or greater than a thickness Dy of a second layer 22y formed by the second negative electrode slurry. FIG. 3 illustrates a cross-section of the negative electrode mixture layer 22 when the first layer 22x is thinner than the second layer 22y. In this case as well, the inner layer 22a and outer layer 22b when the negative electrode mixture layer 22 is divided into two equal parts in the thickness direction satisfy the above conditions. Note that the negative electrode mixture layer 22 may be formed of three or more layers. In this case as well, the inner layer 22a and outer layer 22b when the negative electrode mixture layer 22 is divided into two equal parts in the thickness direction satisfy the above conditions.

### (Supplementary Note)

The above description discloses the following technologies.

### (Technology 1)

A non-aqueous electrolyte secondary battery including:
a positive electrode; a negative electrode; and a non-aqueous electrolyte, wherein
the negative electrode includes a negative electrode current collector and a negative electrode mixture layer disposed on the negative electrode current collector and containing a negative electrode active material,
the negative electrode mixture layer contains graphite particles as the negative electrode active material,
when the negative electrode mixture layer is divided in a thickness direction into two equal parts of an inner layer on the negative electrode current collector side and an outer layer on an outer surface side of the negative electrode mixture layer, an average value of internal void ratios of the graphite particles present in the outer layer is smaller than an average value of internal void ratios of the graphite particles present in the inner layer,
the non-aqueous electrolyte contains a heterocyclic compound,
a heterocyclic ring of the heterocyclic compound contains nitrogen and sulfur, and
the heterocyclic compound has an electron-withdrawing group R containing oxygen and/or nitrogen.

### (Technology 2)

The non-aqueous electrolyte secondary battery according to Technology 1, wherein
the graphite particles include first graphite particles and second graphite particles,
an internal void ratio of the first graphite particles is smaller than an internal void ratio of the second graphite particles, and
a content R1out of the first graphite particles in the outer layer is greater than a content R1inn of the first graphite particles in the inner layer.

### (Technology 3)

The non-aqueous electrolyte secondary battery according to Technology 2, wherein the internal void ratio of the first graphite particles is 5% or less, and the internal void ratio of the second graphite particles is in a range of 8% to 20%.

### (Technology 4)

The non-aqueous electrolyte secondary battery according to any one of Technologies 1 to 3, wherein
the electron-withdrawing group R includes at least one selected from the group consisting of a carbonyl group, a nitrile group, a sulfonyl group, an isocyanate group, an isothiocyanate group, and a hydroxy group, and
the hydroxy group is bonded to a carbon atom that constitutes a saturated hydrocarbon group.

### (Technology 5)

The non-aqueous electrolyte secondary battery according to Technology 4, wherein the carbonyl group is included in at least one selected from the group consisting of an aldehyde group, a ketone group, an amide bond, an ester bond, and a carboxy group.

### (Technology 6)

The non-aqueous electrolyte secondary battery according to any one of Technologies 1 to 5, wherein the heterocyclic ring includes at least one selected from the group consisting of a thiazole ring, a thiomorpholine ring, and a thiazepine ring.

### (Technology 7)

The non-aqueous electrolyte secondary battery according to any one of Technologies 1 to 6, wherein the heterocyclic compound includes at least one selected from the group consisting of 4,5-dimethyl-1,3-thiazole-2-carbaldehyde, 4,5,6,7-tetrahydro-1,3-benzothiazole-2-carbaldehyde, 2-ethylthiomorpholine-4-carbaldehyde, and 2,3-dimethylthiomorpholine-4-carbaldehyde.

### (Technology 8)

The non-aqueous electrolyte secondary battery according to any one of Technologies 1 to 7, wherein a content of the heterocyclic compound in the non-aqueous electrolyte is in a range of 0.1 mass% to 2.0 mass%.

### (Technology 9)

The non-aqueous electrolyte secondary battery according to any one of Technologies 1 to 8, wherein the negative electrode mixture layer further contains a Si-containing material as the negative electrode active material.

### Examples

The present disclosure will be described in detail below based on examples. The present disclosure is not limited to the following examples. In the examples, a plurality of non-aqueous electrolyte secondary batteries were prepared and evaluated.

### (Battery A1)

A battery A1 was prepared using the following procedure.

### (1) Preparation of Positive Electrode

A positive electrode slurry was prepared by mixing 100 parts by mass of positive electrode active material particles (LiNi_{0.88}Co_{0.09}Al_{0.03}O₂), 1 part by mass of carbon nanotubes, 1 part by mass of polyvinylidene fluoride, and an appropriate amount of N-methyl-2-pyrrolidone (NMP). Next, a coating film was formed by applying the positive electrode slurry to an aluminum foil. Next, the coating film was dried and then rolled. In this manner, the positive electrode including the aluminum foil and the positive electrode mixture layer formed on the aluminum foil was obtained.

### (2) Preparation of Negative Electrode

A negative electrode slurry for a first layer was prepared by mixing 98 parts by mass of negative electrode active material (second graphite particles), 1 part by mass of sodium carboxymethylcellulose (CMC-Na), 1 part by mass of SBR, and an appropriate amount of water. Furthermore, a negative electrode slurry for a second layer was prepared by mixing 98 parts by mass of negative electrode active material (graphite particles), 1 part by mass of sodium carboxymethylcellulose (CMC-Na), 1 part by mass of SBR, and an appropriate amount of water. As the graphite particles, particles obtained by mixing first graphite particles and the second graphite particles at a mass ratio of 50:50 were used. In preparation of the negative electrode slurry for the first layer and the negative electrode slurry for the second layer, as the first graphite particles, particles with an internal void ratio Vr1 of 3% were used, and as the second graphite particles, particles with an internal void ratio Vr2 of 15% were used.

Next, the negative electrode slurry for the first layer was applied to a copper foil (negative electrode current collector) to form the first layer. Next, the negative electrode slurry for the second layer was applied onto the first layer to form the second layer. Next, a laminate including the negative electrode current collector, the first layer, and the second layer was rolled. In this manner, the negative electrode including the copper foil and the negative electrode mixture layer formed on the copper foil was obtained. A thickness of the first layer and a thickness of the second layer were made equal. That is, the first layer is the inner layer described above, and the second layer is the outer layer described above.

### (3) Preparation of Non-Aqueous Electrolyte (Electrolyte Solution)

An electrolyte solution (non-aqueous electrolyte) was prepared by dissolving LiPF₆ and the compound (C) that is the heterocyclic compound, in a mixed solvent of ethylene carbonate (EC) and ethyl methyl carbonate (EMC) (EC:EMC = 3:7 (volume ratio)). The concentration of LiPF₆ in the electrolyte solution was 1.0 mol/L. 4,5-dimethyl-1,3-thiazole-2-carbaldehyde was used as the compound (C). The content (concentration) of the compound (C) in the electrolyte solution was set to a value shown in Table 2.

The structure of 4,5-dimethyl-1,3-thiazole-2-carbaldehyde used as the heterocyclic compound (C) is shown below.

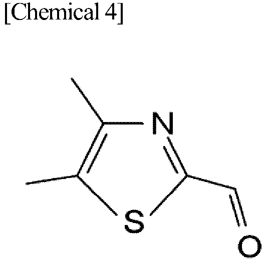

### (4) Preparation of Non-Aqueous Electrolyte Secondary Battery

The positive electrode was cut into a predetermined shape. Next, a portion of the positive electrode mixture layer was scraped off to expose the positive electrode current collector, to create a connection region to be connected with a tab lead. In this manner, a positive electrode including a region (size: 20 mm×20 mm) functioning as the positive electrode and the connection region to be connected with the tab lead was obtained. Next, the exposed portion of the positive electrode current collector was connected to a positive electrode tab lead. Next, a predetermined region on an outer periphery of the positive electrode tab lead was covered with an insulating tab film. A positive electrode for evaluation was obtained in this manner.

The negative electrode was cut into the same shape as the positive electrode. Next, the same processing as that performed on the positive electrode was performed to obtain a negative electrode including a region functioning as the negative electrode and a connection region to be connected with a tab lead. Next, the exposed portion of the negative electrode current collector was connected to a negative electrode tab lead. Next, a predetermined region on an outer periphery of the negative electrode tab lead was covered with an insulating tab film. A negative electrode for evaluation was obtained in this manner.

A battery was prepared using the positive electrode for evaluation and the negative electrode for evaluation. First, an electrode group was obtained by arranging the positive electrode and the negative electrode such that the positive electrode mixture layer and the negative electrode mixture layer faced each other with a separator interposed therebetween. A polyethylene separator (12 µm thick) was used as the separator. Next, an Al laminate film (100 µm thick) cut to a rectangle (60 mm×90 mm) was folded in half. Next, end portions of the folded laminate film on its long sides with a length of 60 mm were then heat-sealed to form a tubular shape of 60 mm×45 mm. Thereafter, the prepared electrode group was placed in the tube. Next, an end surface of the Al laminate film and a thermal welding resin of the tab leads were aligned and sealed. Next, the non-aqueous electrolyte solution was injected from a short side of the Al laminate film, which was not heat-sealed, to impregnate the mixture layers with the non-aqueous electrolyte solution. Finally, an end surface of the Al laminate film on a side where the electrolyte solution was injected was sealed. A battery A1 (non-aqueous electrolyte secondary battery) for evaluation was obtained in this manner.

### (Batteries A2, A3, and C1 to C3)

Batteries A2, A3, and C1 to C3 were prepared using the same method and conditions as those of the battery A1, except that ratios of the first graphite particles to the second graphite particles in the first layer (inner layer) and the second layer (outer layer), the internal void ratio Vr1 of the first graphite particles, the internal void ratio Vr2 of the second graphite particles, and the concentration of the heterocyclic compound (C) in the electrolyte solution were set to values shown in Table 2. The same heterocyclic compound (C) used in preparation of the battery A1 was used for the heterocyclic compound (C). No heterocyclic compound (C) was added to the electrolyte solution of the batteries C1 and C2.

Internal resistances of the batteries A1 to A3 and C1 to C3 were measured. Table 2 shows some of manufacturing conditions of the batteries and measured internal resistances. A lower internal resistance is preferable.

**[Table 2]**

| | Internal void ratio (%) | | Mass ratio (first graphite particle: second graphite particle) | | Concentration of compound (C) (mass%) | Internal resistance (mΩ) |
|---|---|---|---|---|---|---|
| Battery | Vr1 of first graphite particle | Vr2 of second graphite particle | Outer layer (Second layer) | Inner layer (First layer) | | |
| A1 | 3 | 15 | 50:50 | 0:100 | 0.5 | 77 |
| A2 | 15 | 25 | 50:50 | 0:100 | 0.5 | 85 |
| A3 | 3 | 15 | 50:50 | 0:100 | 5.0 | 80 |
| C1 | 3 | 15 | 50:50 | 0:100 | 0 | 100 |
| C2 | 3 | 15 | 25:75 | 25:75 | 0 | 106 |
| C3 | 3 | 15 | 25:75 | 25:75 | 0.5 | 94 |

The batteries A1 to A3 are non-aqueous electrolyte secondary batteries (B) according to the present disclosure. The batteries C1 to C3 are comparative examples. In the batteries A1 to A3 and C1, the average value VAout of the internal void ratios of the graphite particles present in the outer layer is smaller than the average value VAinn of the internal void ratios of the graphite particles present in the inner layer. In the batteries C2 and C3, the average value VAout of the internal void ratios of the graphite particles present in the outer layer is equal to the average value VAinn of the internal void ratios of the graphite particles present in the inner layer.

As shown in Table 2, the resistance could be reduced by adding the compound (C) to the electrolyte solution. Furthermore, the resistance could be significantly reduced by making the average value VAout of the internal void ratios of the graphite particles present in the outer layer smaller than the average value VAinn of the internal void ratios of the graphite particles present in the inner layer. Note that similar effects were obtained when the compound (C) was changed to any of 4,5,6,7-tetrahydro-1,3-benzothiazole-2-carbaldehyde, 2-ethylthiomorpholine-4-carbaldehyde, and 2,3-dimethylthiomorpholine-4-carbaldehyde.

### [Industrial Applicability]

The present disclosure is applicable to the non-aqueous electrolyte secondary batteries.

The present invention has been described in relation to currently preferred embodiments, but such disclosure should not be interpreted restrictively. Various variations and modifications will be undoubtedly apparent to those skilled in the art in the field to which the present invention pertains by reading the above disclosure. Therefore, the appended claims should be construed as encompassing all variations and modifications without departing from the true spirit and scope of the present invention.

### [Reference Signs List]

1: electrode group, 5: sealing plate, 6: negative electrode terminal, 7: resin gasket, 10: non-aqueous electrolyte secondary battery, 20: negative electrode, 21: negative electrode current collector, 22: negative electrode mixture layer, 22a: inner layer, 22b: outer layer

## Claims

1. A non-aqueous electrolyte secondary battery comprising:
a positive electrode; a negative electrode; and a non-aqueous electrolyte, wherein
the negative electrode includes a negative electrode current collector and a negative electrode mixture layer disposed on the negative electrode current collector and containing a negative electrode active material,
the negative electrode mixture layer contains graphite particles as the negative electrode active material,
when the negative electrode mixture layer is divided in a thickness direction into two equal parts of an inner layer on the negative electrode current collector side and an outer layer on an outer surface side of the negative electrode mixture layer, an average value of internal void ratios of the graphite particles present in the outer layer is smaller than an average value of internal void ratios of the graphite particles present in the inner layer,
the non-aqueous electrolyte contains a heterocyclic compound,
a heterocyclic ring of the heterocyclic compound contains nitrogen and sulfur, and
the heterocyclic compound has an electron-withdrawing group R containing oxygen and/or nitrogen.

2. The non-aqueous electrolyte secondary battery according to claim 1, wherein
the graphite particles include first graphite particles and second graphite particles, an internal void ratio of the first graphite particles is smaller than an internal void ratio of the second graphite particles, and
a content R1out of the first graphite particles in the outer layer is greater than a content R1inn of the first graphite particles in the inner layer.

3. The non-aqueous electrolyte secondary battery according to claim 2, wherein the internal void ratio of the first graphite particles is 5% or less, and the internal void ratio of the second graphite particles is in a range of 8% to 20%.

4. The non-aqueous electrolyte secondary battery according to claim 1 or 2, wherein
the electron-withdrawing group R includes at least one selected from the group consisting of a carbonyl group, a nitrile group, a sulfonyl group, an isocyanate group, an isothiocyanate group, and a hydroxy group, and
the hydroxy group is bonded to a carbon atom that constitutes a saturated hydrocarbon group.

5. The non-aqueous electrolyte secondary battery according to claim 4, wherein the carbonyl group is included in at least one selected from the group consisting of an aldehyde group, a ketone group, an amide bond, an ester bond, and a carboxy group.

6. The non-aqueous electrolyte secondary battery according to claim 1 or 2, wherein the heterocyclic ring includes at least one selected from the group consisting of a thiazole ring, a thiomorpholine ring, and a thiazepine ring.

7. The non-aqueous electrolyte secondary battery according to claim 1 or 2, wherein the heterocyclic compound includes at least one selected from the group consisting of 4,5-dimethyl-1,3-thiazole-2-carbaldehyde, 4,5,6,7-tetrahydro-1,3-benzothiazole-2-carbaldehyde, 2-ethylthiomorpholine-4-carbaldehyde, and 2,3-dimethylthiomorpholine-4-carbaldehyde.

8. The non-aqueous electrolyte secondary battery according to claim 1 or 2, wherein a content of the heterocyclic compound in the non-aqueous electrolyte is in a range of 0.1 mass% to 2.0 mass%.

9. The non-aqueous electrolyte secondary battery according to claim 1 or 2, wherein the negative electrode mixture layer further contains a Si-containing material as the negative electrode active material.
